# EUROPEAN PATENT SPECIFICATION

(11) **EP 4 436 353 B1**
(45) Date of publication and mention of the grant of the patent: **06.08.2025**
(21) Application number: 22818187.1
(22) Date of filing: 21.11.2022
(51) Int. Cl.: A01B 61/04

(54) **AN AGRICULTURAL MACHINE COMPRISING A DEVICE TO PROTECT A WORK TOOL**
EINE LANDWIRTSCHAFTLICHE MASCHINE MIT EINER VORRICHTUNG ZUM SCHUTZ EINES ARBEITSGERÄTES
UNE MACHINE AGRICOLE COMPRENANT UN DISPOSITIF POUR PROTÉGER UN OUTIL DE TRAVAIL

(30) Priority: 23.11.2021 CZ 20210529
(43) Date of publication of application: 02.10.2024
(73) Proprietor: Farmet A.S., 55203 Ceská Skalice (CZ)
(72) Inventor: SMOLA, Tomás, 552 04 Chvalkovice (CZ); NÝC , Michal, 549 41 Cerveným Kostelcem (CZ); BINAR, Lubos, 542 32 Úpice (CZ); LUKÁSEK, Petr, 503 46 Librantice c.p. 147 (CZ)
(74) Representative: Skoda, Milan
(86) International application number: PCT/CZ2022/000046
(87) International publication number: WO 2023/093921

(56) References cited:
- CZ-B6- 303 936
- CZ-B6- 308 578
- FR-A1- 2 498 875
- FR-A1- 2 842 699

## Description

### Technical Field

The invention relates to a device to protect a work tool of a soil cultivator against overload when hitting an obstacle.

### State of the Art

At the present time, there exists a whole series of mechanisms to attach work tools of agricultural machines to the frame and to unlock or release them safely when overload occurs.

One of them is protection of work tools of agricultural machines using deformed rubber elements that take advantage of their elastic properties. The work tool is attached to the load-bearing frame of the machine with the rubber elements. In basic state, these elements are compressed. When the tool is loaded it deflects, the rubber deformation increases and so does the force necessary for further deflection. This structural design is known from many patent documents such as, for example, EP 2404489A1, EP 2548428, EP 1541003, DE 102009058342, EP 1880590, EP 2548427, DE 202004007112, EP 2210460, DE 10204160, EP 2548426, and ES 2381692. Disadvantages of this structural design include the fact that precise and firm guidance of the tool cannot be achieved. The work tool permanently vibrates when working depending on the intensity of the load. In addition to that, it is impossible to determine the exact unlocking or releasing force. Moreover, the working angles of the tools constantly change.

Another known protection of work tools of agricultural machines is that using a coiled spring. Here, the attachment of the work tool to the load-bearing frame consists of a swivelling mounting, of a coiled spring and of a stop which takes up the basic position of the tool. In the basic state, the spring is pre-stressed. Owing to this, the work tool is guided firmly and is not deflected until the determined unlocking force is achieved. This structural design is known, for example, from Patent Documents CA 2199335 and EP 1125488. One major disadvantage of this structural design is the fact that it is more complicated and more expensive. Another disadvantage is that the swiveling mounting mostly consists of a pinned joint which is often prone to considerable abrasive wear.

Another type of protection of work tools of agricultural machines known from the existing state of the art is that using a hydraulic cylinder. This structural design is based on a principle similar to that with the coiled spring but here, a hydraulic cylinder along with a pressure accumulator are used instead of the spring. This design is, before all, used with work tools exposed to heavy-duty working conditions. This structural design is known, for example, from Patent Documents US 7823651, DE 19810682, FR 2832203 and US 4505337. This structural design possess, in principle, the same disadvantages as the protection system using the coiled spring described above.

Patent Document CZ 303936 describes a swivel and resilient mounting of the cultivator tine which consists of a bracket attached to the basic frame, of an arm including the tine which is provided with a freely rotatable disk or with a small share and a spring. The arm is resiliently and rotatably attached to the bracket using at least two silentblocks as follows: The first silentblock (with an axial clearance for the first abrasion-resistant pad) is pressed in the arm from the one side while the second silentblock (with an axial clearance for the second abrasion-resistant pad) is pressed in the arm from the other side. Both the silentblocks are braced in the axial position with an expanding bushing and secured by a pin with a nut. A disadvantage of this structural design is, in a way, the very unstable seating in the silentblocks which does not facilitate firm guidance of the work tool. The work tool constantly moves when working and the working angles of the tools keep changing at all times.

Another design is known from Patent Document CZ308578. It is a swinging mounting of a work tool of a cultivator, of a fertilizer applicator or of a seeding machine to protect the work tool against overload when hitting an obstacle. According to this design, the connection between the frame of the particular agricultural machine and the tine of the work tool contains at least one resilient tubular segment made of rubber, which is attached (using vulcanization) by all its inner surface directly to the surface of the shaft and is, at the same time, pressed in the bushing and the shaft is, at the same time, fastened in the load-bearing frame and the bushing is connected with the tine of the work tool. A disadvantage of this type of mounting is the fact that the whole work tool is seated in all its axes on the resilient tubular segments only which causes, owing to their high mechanical stress, their quick wear and tear. Another disadvantage of this structural design is the fact that the guidance of the tool through the soil is not quite stable in all the three axes. Another drawback of this design is the fact that the manufacture of this type of mounting is technologically demanding and therefore relatively expensive.

It is obvious from the above state of the art that there exists a whole series of disadvantages with respect to the present state of the art. The most distinct disadvantage appears to be the fact that accurate, firm and stable 3D guidance of the work tool cannot be achieved with most structural designs known so far and that the working angles of the tools constantly change.

The goal of this invention is to construct a device to protect the work tool of an agricultural machine whose structural design is simple, whose manufacture is not expensive, and which, before all, facilitates accurate, firm and stable guidance of the work tool through the soil and whose all parts are wear resistant.

### Principle of the Invention

The aforementioned drawbacks and disadvantages are eliminated and the goal of the invention accomplished by an agricultural machine comprising a load bearing frame, a work tool and a device to protect the work tool, especially a device to protect the work tool of a soil cultivator against overload when hitting an obstacle, the device to protect the work tool containing a swinging mounting arranged in connection between the load-bearing frame of the machine and its work tool according to the invention whose nature lies in the fact that the work tool is attached to a tube in the cavity of which there is a shaft fixed to the load-bearing frame and that at least two resilient sealing rings in an anti-slip manner are arranged at the edges of the cavity, and that there is an oil fill arranged between the sealing rings inside the cavity of the tube. The advantage of this structural design is the fact that it is fully functional while being very simple, cheap to manufacture and almost maintenance-free.

According to the first advantageous variant, at least one bushing is fixed in the cavity of the tube and the bushing is, at the same time, slidably mounted on the shaft. Owing to the slidable mounting of the tube bushing on the shaft, it is practically possible to eliminate the radial load of the resilient sealing rings which extends their service life in a considerable way.

According to the second advantageous variant, the shaft is slidably seated directly in the cavity of the tube. This variant has the same advantages as the previous one.

It can also be advantageous if at least one antifriction bearing (placed, at the same time, in the cavity of the tube) is placed on the shaft.

The work tool is advantageously mounted on the shaft in a swinging manner within the range of the deformation of the resilient sealing rings and the range of the deformation of the resilient sealing rings corresponds to the working swinging angle of the work tool. The advantage of this arrangement is the fact that owing to the massive resilient sealing rings, the work tool turns within the range of their resilient deformation only and that the resilient rings do not spin around on the shaft or in the tube which considerably extends their service life.

It is also advantageous if the inner surface of the resilient rings clamps the shaft tightly and if the outer surface of the rings pushes against the tube in an expanding way.

It is also advantageous if the resilient rings push against the tube and against the shaft in the radial direction. If the surfaces of the tube and of the shaft are appropriately shaped, the resilient rings can possibly touch the tube and the shaft partly or also in the full axial direction.

Between the resilient rings, inside the cavity of the tube, oil fill is arranged which is advantageous for simple lubrication of the sliding support of the tube on the shaft.

It is advantageous if the bushing is made of hardened steel as its service life becomes very long and practically maintenance-free.

It is also advantageous if the retaining rings are placed on the shaft beside the resilient rings in the cavity of the tube in order to prevent axial movement of the shaft inside the tube.

It is further advantageous if the work tool is placed on a holder which is attached to the tube. The advantage lies in the fact that in case the work tool is worn and torn, it can be easily replaced without the necessity of complicated disassembly of the whole resilient mounting.

The device to protect the work tool of an agricultural machine also contains a compression spring which is arranged between the work tool and the frame of the machine. The advantage of this design is simple absorption of swings of the work tool.

It is advantageous if the compression spring leans (either directly or via the first spacer) against the holder of the work tool with its one side and if it leans (in a swinging manner) with its other side against at least one tip which is dismantlably attached (via the second spacer) to the load-bearing frame of the machine. The advantage of this structural design lies in its simplicity with minimum manufacturing cost.

It is also advantageous if the tube is provided with a hole in which a plug is arranged. The advantage lies in the fact that the oil fill can easily be topped up.

The structural design of the device to protect the work tool of an agricultural machine according to this invention is simple and practically maintenance-free. A great advantage of this design is the fact that the mounting of the work tool is very stable which results in its long service life. Another advantage of the structural design according to this invention is the fact that it facilitates firm and accurate guidance of the work tool. The design facilitates turning the whole mounting of the work tool by approx. 25 to 30 degrees within the range of the resilient deformation of the resilient sealing rings without their slip which considerably extends their service life.

### Overview of the Figures

The invention will be illuminated in more detail by a drawing in which Fig. 1 shows a sectional view of the mounting of the work tool on the shaft seated in the frame of an agricultural machine, Fig. 2 shows the general arrangement of the device to protect the work tool of an agricultural machine in a lateral axonometric view, and Fig. 3 shows the general arrangement of the device to protect the work tool of an agricultural machine in a rear axonometric view.

### Examples of the Performance of the Invention

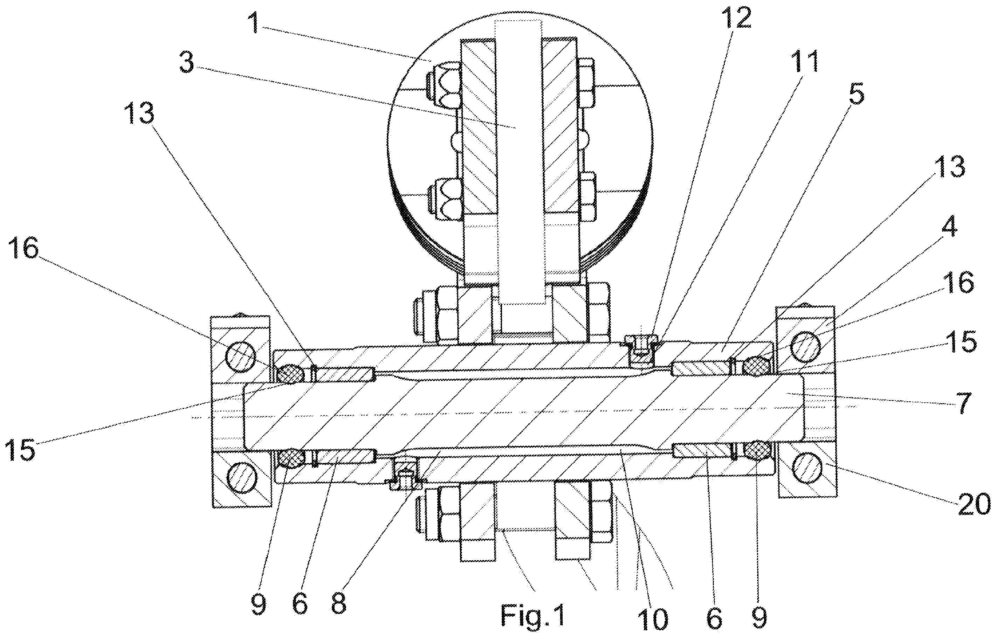

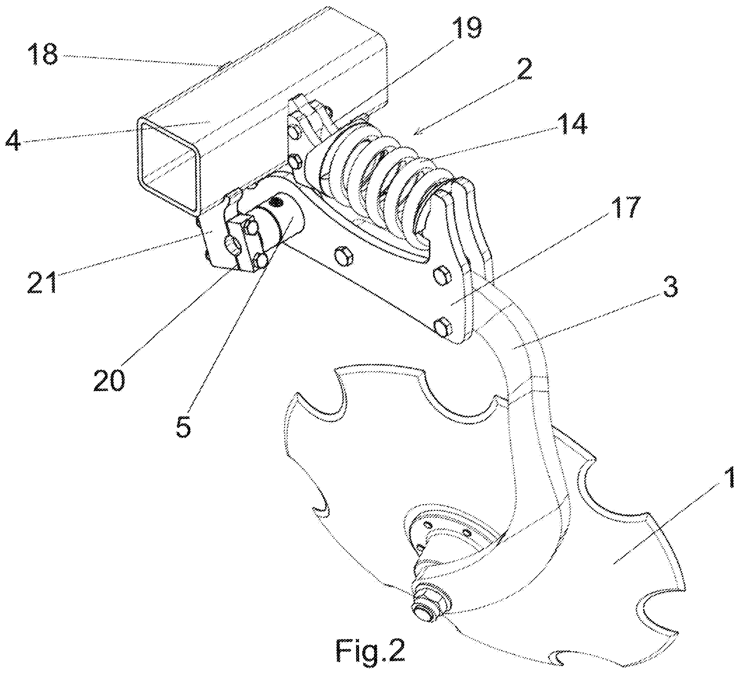

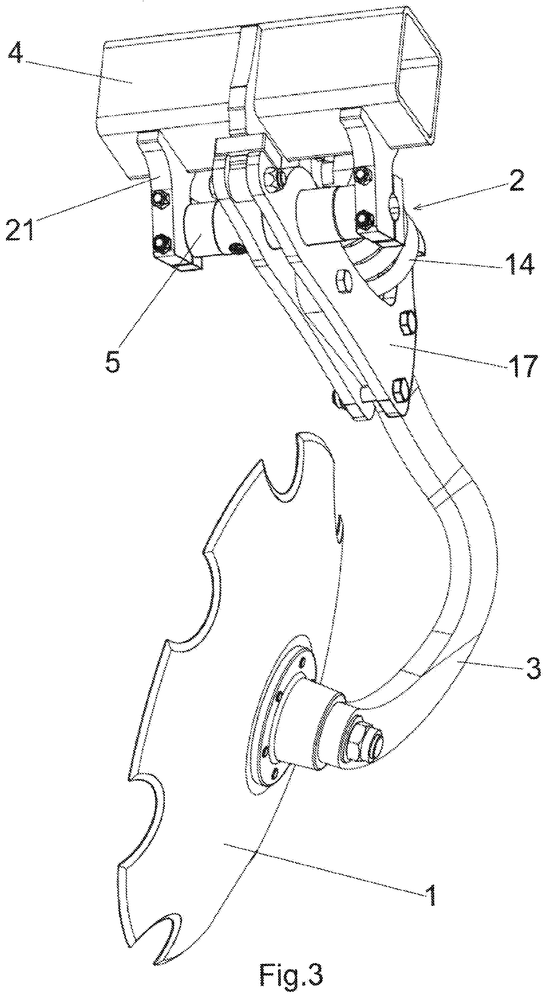

The device to protect (Fig. 1, Fig. 2, Fig. 3) the work tool 1 of a cultivator against overload when hitting an obstacle consists of a swinging mounting 2 arranged in connection between the load-bearing frame 4 of the machine and its work tool 1 which is a working disk.

The work tool 1 is attached to a tube 5 in the cavity 8 of which a shaft 7 is seated. The shaft is fixed in the load-bearing frame 4 of the machine, and at the edges of the cavity 8, two resilient sealing rings 9 in an anti-slip manner are arranged.

According to the first advantageous variant shown, two bushings 6 are fixed in the cavity 8 of the tube 5. These bushings 6 are, at the same time, slidably mounted on the shaft 7.

According to further variants not shown, two antifriction bearings can be mounted on the shaft 7 and the bearings are, at the same time, seated in the cavity 8 of the tube 5 or the shaft 7 can be slidably seated directly in the cavity 8 of the tube 5.

According to the variant shown, the bushings 6 which have considerably higher hardness than the tube 5 are made of hardened steel.

The work tool 1 is attached to the tube 5 as follows: At first, the work tool 1 is mounted on the holder 3 which is dismantlably attached to a pair of the first spacers 17 attached to the tube 5.

The shaft 7 is mounted in the load-bearing frame 4 of the machine in the following manner: At first, the shaft 7 is seated in a clamping assembly 20 which is part of the third spacer 21 attached to the frame 4 of the machine.

The work tool 1 is mounted on the shaft 7 in a swinging manner within the range of the resilient deformation of the resilient rings 9, and the range of the resilient deformation of the resilient rings 9 corresponds to the working swinging angle (approx. 25 to 30 degrees) of the work tool 1.

The inner surface 15 of the resilient rings 9 clamps the shaft 7 tightly and the outer surface 16 of the rings pushes against the tube 5 in an expanding way.

The resilient rings 9 are arranged at the edges of the cavity 8 of the tube 5 and push against the tube 5 and against the shaft 7 in the radial direction.

There is oil fill 10 arranged between the resilient rings 9 inside the cavity 8 of the tube 5.

Beside the resilient rings 9, inside the cavity 8 of the tube 5, retaining rings 13 are placed on the shaft 7 and these retaining rings 13 are held in position at the bushings 8 by retaining rings 22.

Between the work tool 1 and the frame 4 of the machine, is a compression spring 14 which, leans against the work tool 1 and against the frame 4 of the machine at the same time.

The compression spring 14 leans against the pair of the first spacers 17 in which a holder 3 of the work tool 1 is fixed. The compression spring 14 can also lean against the holder 3 of the work tool 1 directly.

The other side of the compression spring 14 leans (in a swinging manner) against a tip 19 which consists of two dismantlable pieces which are, through the second spacer 18, attached to the load-bearing frame 4 of the machine.

The tube 5 is provided with a hole 11 in which a plug 12 is arranged.

The device works in the following manner: The work tool 1 swings within the range of the resilient deformation of the resilient rings 9 which corresponds to the working swinging angle of the work tool 1 and, when hitting a solid obstacle, the swinging movement is, at the same time, absorbed by the compression spring 14.

### Industrial Application

The device to protect a work tool of an agricultural machine can be used for protection of a work tool of a cultivator, of a fertilizer applicator or of a seeding machine against overload when hitting an obstacle.

### List of Reference Marks

- 1: work tool
- 2: swinging mounting
- 3: holder
- 4: load-bearing frame
- 5: tube
- 6: bushing
- 7: shaft
- 8: cavity
- 9: resilient ring
- 10: oil fill
- 11: hole
- 12: plug
- 13: retaining ring
- 14: compression spring
- 15: inner surface
- 16: outer surface
- 17: first spacer
- 18: second spacer
- 19: tip
- 20: clamping assembly
- 21: third spacer
- 22: retaining ring

## Claims

1. An agricultural machine comprising a load bearing frame (4), a work tool (1) and a device to protect the work tool (1), especially a device to protect the work tool (1) of a soil cultivator against overload when hitting an obstacle, the device to protect the work tool (1) containing a swinging mounting (2) arranged in connection between the load-bearing frame (4) of the machine and the work tool (1) **characterized in that** the work tool (1) is attached to a tube (5) in the cavity (8) of which there is a shaft (7) fixed to the load-bearing frame (4), and that at the edges of the cavity (8), at least two resilient sealing rings (9) are arranged in an anti-slip manner and that between the rings (9) an oil fill (10) is arranged inside the cavity (8) of the tube (5).

2. The agricultural machine according to Claim 1 **characterized in that** in the cavity (8) of the tube (5) at least one bushing (6) is fixed and that the at least one bushing (6) is, at the same time, slidably mounted on the shaft (7).

3. The agricultural machine according to Claim 1 **characterized in that** on the shaft (7) at least one antifriction bearing is placed and the at least one bearing is, at the same time, placed in the cavity (8) of the tube (5).

4. The agricultural machine according to Claim 1 **characterized in that** the shaft (7) is slidably seated in the cavity (8) of the tube (5).

5. The agricultural machine according to some of Claims 1 through 4 **characterized in that** the work tool (1) is mounted on the shaft (7) in a swinging manner within the range of the resilient deformation of the resilient sealing rings (9) and that the range of the deformation of the resilient sealing rings (9) corresponds to the working swinging angle of the work tool (1).

6. The agricultural machine according to some of Claims 1 through 5 **characterized in that** the inner surface (15) of the resilient sealing rings (9) clamps the shaft (7) tightly and the outer surface (16) of the resilient sealing rings (9) pushes against the tube (5) in an expanding way.

7. The agricultural machine according to some of Claims 1 through 6 **characterized in that** the resilient sealing rings (9) push against the tube (5) and against the shaft (7) in the radial direction.

8. The agricultural machine according to some of Claims 2, 5, 6, and 7 **characterized in that** the bushing (6) is made of hardened steel.

9. The agricultural machine according to some of Claims 1 through 8 **characterized in that** in the cavity (8) of the tube (5), retaining rings (13) are placed on the shaft (7) beside the resilient sealing rings (9).

10. The agricultural machine according to some of Claims 1 through 9 **characterized in that** the work tool (1) is placed on a holder (3) which is attached to the tube (5).

11. The agricultural machine according to some of Claims 1 through 10 **characterized in that** between the work tool (1) and the frame (4) of the machine a compression spring (14) is arranged.

12. The agricultural machine according to Claim 11 **characterized in that** the compression spring (14) leans, either directly or via a first spacer (17) against the holder (3) of the work tool (1) with its one side, and with its other side, the compression spring leans, in a swinging manner, against at least one tip (19) which is dismantlably attached, via a second spacer (18), to the load-bearing frame (4) of the machine.

13. The agricultural machine according to some of Claims 1 through 12 **characterized in that** the tube (5) is provided with a hole (11) in which a plug (12) is arranged.

## Patentansprüche

1. Landwirtschaftliche Maschine mit einem Tragrahmen (4), einem Arbeitswerkzeug (1) und einer Vorrichtung zum Schutz des Arbeitswerkzeugs (1), insbesondere einer Vorrichtung zum Schutz des Arbeitswerkzeugs (1) eines Bodengrubbers gegen Überlastung beim Aufprall auf ein Hindernis, wobei die Vorrichtung zum Schutz des Arbeitswerkzeugs (1) eine schwenkbare Lagerung (2) enthält, die in der Verbindung des Tragrahmens (4) der Maschine und des Arbeitswerkzeugs (1) angeordnet ist, die **dadurch gekennzeichnet ist, dass** das Arbeitswerkzeug (1) an einem Rohr (5) befestigt ist, in dessen Hohlraum (8) sich eine Welle (7) befindet, die im Tragrahmen (4) der Maschine befestigt ist, wobei an den Rändern des Hohlraums (8) gleichzeitig mindestens zwei elastische Dichtungsringe (9) rutschfest angeordnet sind, zwischen denen innerhalb des Hohlraums (8) des Rohrs (5) eine Ölfüllung (10) angeordnet ist.

2. Landwirtschaftliche Maschine, nach dem Anspruch 1, **dadurch gekennzeichnet, dass** im Hohlraum (8) des Rohres (5) mindestens eine Hülle (6) befestigt ist, und gleichzeitig mindestens eine Hülle (6) auf der Welle (7) gleitend gelagert ist.

3. Landwirtschaftliche Maschine, nach dem Anspruch 1, **dadurch gekennzeichnet, dass** mindestens ein Walzlager auf der Welle (7) und gleichzeitig mindestens ein Walzlager im Hohlraum (8) des Rohres (5) gelagert sind.

4. Landwirtschaftliche Maschine, nach dem Anspruch 1, **dadurch gekennzeichnet, dass** die Welle (7) im Hohlraum (8) des Rohres (5) gleitend gelagert ist.

5. Landwirtschaftliche Maschine, nach einem der Ansprüche 1 bis 4, **dadurch gekennzeichnet, dass** das Arbeitswerkzeug (1) innerhalb des Bereichs der elastischen Verformung der elastischen Dichtungsringe (9) schwenkbar auf der Welle (7) gelagert ist, wobei der Bereich der elastischen Verformung der elastischen Dichtungsringe (9) dem Arbeitsschwenkwinkel des Arbeitswerkzeugs (1) entspricht.

6. Landwirtschaftliche Maschine, nach einem der Ansprüche 1 bis 5, **dadurch gekennzeichnet, dass** die elastischen Dichtungsringe (9) mit ihrem Innenteil (15) klemmend auf die Welle (7) und die elastischen Dichtungsringe (9) mit ihrem Außenteil (16) aufspannend auf das Rohr (5) anliegen.

7. Landwirtschaftliche Maschine, nach einem der Ansprüche 1 bis 6, **dadurch gekennzeichnet, dass** die elastischen Dichtungsringe (9) auf das Rohr (5) und auf die Welle (7) in Radialrichtung anliegen.

8. Landwirtschaftliche Maschine, nach einem der Ansprüche 2, 5, 6 und 7, **dadurch gekennzeichnet, dass** die Hülle (6) aus gehärtetem Stahl hergestellt ist.

9. Landwirtschaftliche Maschine, nach einem der Ansprüche 1 bis 8, **dadurch gekennzeichnet, dass** im Hohlraum (8) des Rohres (5) neben den elastischen Dichtungsringen (9) auch Sicherungsringe (13) auf der Welle (7) gelagert sind.

10. Landwirtschaftliche Maschine, nach einem der Ansprüche 1 bis 9, **dadurch gekennzeichnet, dass** das Arbeitswerkzeug (1) an einem Halter (3) gelagert ist, der an dem Rohr (5) befestigt ist.

11. Landwirtschaftliche Maschine, nach einem der Ansprüche 1 bis 10, **dadurch gekennzeichnet, dass** zwischen dem Arbeitswerkzeug (1) und dem Rahmen (4) der Maschine eine Druckfeder (14) angeordnet ist.

12. Landwirtschaftliche Maschine, nach dem Anspruch 11, **dadurch gekennzeichnet , dass** sich die Druckfeder (14) mit einer Seite direkt oder über das erste Passstück (17) gegen den Halter (3) des Arbeitswerkzeugs (1), und mit der anderen Seite schwingend gegen mindestens eine Spitze (19), die über das zweite Passstück (18) am Tragrahmen (4) der Maschine demontierbar befestigt ist, lehnt.

13. Landwirtschaftliche Maschine, nach einem der Ansprüche 1 bis 12, **dadurch gekennzeichnet, dass** das Rohr (5) mit einem Loch (11) versehen ist, in dem ein Stopfen (12) eingesetzt ist.

## Revendications

1. Machine agricole comprenant un châssis porteur (4), un outil de travail (1) et un dispositif de protection de l'outil de travail (1), notamment un dispositif de protection de l'outil de travail (1) d'un cultivateur de sol contre les surcharges lors de chocs avec un obstacle, le dispositif de protection de l'outil de travail (1) comprenant un montage oscillant (2) agencé entre le châssis porteur (4) de la machine et l'outil de travail (1), **caractérisée en ce que** l'outil de travail (1) est fixé à un tube (5) dans la cavité (8) duquel est logé un arbre (7), lequel est fixé au châssis porteur (4) de la machine, au niveau des bords de la cavité (8) étant en outre agencés, de manière antidérapante, au moins deux bagues d'étanchéité élastiques (9), entre lesquelles est disposée une charge d'huile (10) à l'intérieur de la cavité (8) du tube (5).

2. Machine agricole selon la revendication 1, **caractérisée en ce que** dans la cavité (8) du tube (5) est fixée au moins une douille (6), ladite douille (6) étant également montée de manière coulissante sur l'arbre (7).

3. Machine agricole selon la revendication 1, **caractérisée en ce que** sur l'arbre (7) est monté au moins un roulement à éléments roulants, ledit roulement étant également disposé dans la cavité (8) du tube (5).

4. Machine agricole selon la revendication 1, **caractérisée en ce que** l'arbre (7) est monté de manière coulissante dans la cavité (8) du tube (5).

5. Machine agricole selon l'une quelconque des revendications 1 à 4, **caractérisée en ce que** l'outil de travail (1) est monté de manière oscillante sur l'arbre (7) dans la limite de la déformation élastique des bagues d'étanchéité élastiques (9), ladite limite de déformation correspondant à l'angle de travail oscillant de l'outil de travail (1).

6. Machine agricole selon l'une quelconque des revendications 1 à 5, **caractérisée en ce que** les bagues d'étanchéité élastiques (9) appliquent leur partie intérieure (15) de manière serrée contre l'arbre (7) et leur partie extérieure (16) de manière expansive contre le tube (5).

7. Machine agricole selon l'une quelconque des revendications 1 à 6, **caractérisée en ce que** les bagues d'étanchéité élastiques (9) s'appliquent contre le tube (5) et l'arbre (7) dans la direction radiale.

8. Machine agricole selon l'une quelconque des revendications 2, 5, 6 et 7, **caractérisée en ce que** la douille (6) est en acier trempé.

9. Machine agricole selon l'une quelconque des revendications 1 à 8, **caractérisée en ce que** dans la cavité (8) du tube (5), des anneaux de retenue (13) sont disposés sur l'arbre (7) à côté des bagues d'étanchéité élastiques (9).

10. Machine agricole selon l'une quelconque des revendications 1 à 9, **caractérisée en ce que** l'outil de travail (1) est monté sur un support (3), lequel est fixé au tube (5).

11. Machine agricole selon l'une quelconque des revendications 1 à 10, **caractérisée en ce qu'un** ressort de compression (14) est agencé entre l'outil de travail (1) et le châssis (4) de la machine.

12. Machine agricole selon la revendication 11, **caractérisée en ce que** le ressort de compression (14) s'appuie, d'un côté, directement ou par l'intermédiaire d'une première cale (17), contre le support (3) de l'outil de travail (1), et, de l'autre côté, de manière oscillante contre au moins une pointe (19) fixée de manière démontable, via une seconde cale (18), au châssis porteur (4) de la machine.

13. Machine agricole selon l'une quelconque des revendications 1 à 12, **caractérisée en ce qu'une** ouverture (11) est pratiquée dans le tube (5), dans laquelle est disposé un bouchon (12).
